(19) Europäisches Patentamt / European Patent Office / Office européen des brevets

(11) **EP 3 147 688 B1**

(12) **FASCICULE DE BREVET EUROPEEN**

(45) Date de publication et mention
de la délivrance du brevet:
**31.01.2018  Bulletin 2018/05**

(51) Int Cl.:
**G01S 13/93** (2006.01)      **G01S 17/93** (2006.01)
**G01S 13/94** (2006.01)      **G01S 17/42** (2006.01)
**G01S 7/40** (2006.01)       **G01S 7/497** (2006.01)
**G01S 13/42** (2006.01)

(21) Numéro de dépôt: **16181108.8**

(22) Date de dépôt: **25.07.2016**

(54) **PROCEDE DE DETECTION D'OBSTACLES ET VEHICULE MUNI D'UN SYSTEME DE DETECTION D'OBSTACLES**

VERFAHREN ZUR ERKENNUNG VON HINDERNISSEN, UND FAHRZEUG, DAS MIT EINEM SOLCHEN HINDERNISERKENNUNGSSYSTEM AUSGESTATTET IST

METHOD FOR DETECTING OBSTACLES AND VEHICLE PROVIDED WITH AN OBSTACLE-DETECTION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **25.09.2015   FR 1501984**

(43) Date de publication de la demande:
**29.03.2017   Bulletin 2017/13**

(73) Titulaire: **Airbus Helicopters
13725 Marignane Cedex (FR)**

(72) Inventeur: **PIRE, Richard
13800 Istres (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
DE-A1-102005 003 969      DE-A1-102007 014 878
FR-A1- 2 913 775          US-A1- 2010 299 067
US-A1- 2013 057 427       US-A1- 2014 062 753

**Description**

La présente invention concerne un procédé de détection d'obstacles, ainsi qu'un véhicule muni d'un système de détection d'obstacles.

L'invention se situe donc dans le domaine technique des systèmes de détection d'obstacles.

Un véhicule, et en particulier un aéronef, peut être équipé d'un système de détection d'obstacles pour suivre une trajectoire au dessus d'un terrain, ou encore pour détecter des obstacles filaires tel qu'un câble électrique. Un système de détection d'obstacles pour un aéronef de type giravion est connu sous l'acronyme OWS correspondant à l'expression anglaise « Obstacle Warning System ».

Un système de détection d'obstacles peut comporter un détecteur d'obstacles connu sous l'acronyme LIDAR correspondant à l'expression anglaise « Light Détection And Ranging », ou un détecteur RADAR. Un tel détecteur d'obstacles comporte un émetteur qui émet un signal de détection, et un récepteur qui reçoit le signal de détection réfléchi par un obstacle. En mesurant la durée d'émission du signal de détection, le détecteur en déduit la distance à laquelle se trouve l'obstacle.

Un RADAR emploie par exemple des ondes radiophoniques pour détecter un obstacle, alors qu'un détecteur LIDAR met en oeuvre une mesure d'une distance en analysant des propriétés d'un faisceau de lumière renvoyé vers son récepteur par un obstacle.

L'expression « signal de détection » fait donc référence à une onde émise par un détecteur d'obstacles, telles qu'une onde radiophonique ou lumineuse.

L'agencement d'un détecteur d'obstacles peut s'avérer délicat sur un véhicule comportant déjà de multiples équipements. En particulier, le détecteur d'obstacles peut devoir être agencé sur un aéronef déjà pourvu d'un radar météorologique, d'un système d'imagerie infrarouge connu sous l'acronyme FLIR correspondant à l'expression anglaise « Forward looking infrared », voire d'une tourelle d'un canon. Par exemple, le détecteur d'obstacles d'un système de détection d'obstacles peut être prévu pour être positionné dans le nez de l'aéronef, à savoir dans une zone traditionnellement occupée par la tourelle d'un canon ou par un radar météorologique.

Par ailleurs, la fiabilité d'un système de détection d'obstacles pourvu d'un détecteur d'obstacles LIDAR peut être limite au regard d'exigences opérationnelles.

Les documents US 2013/057427, DE 10 2005 003969, US 2014/062753, FR 2913775, US 2010/299067 et DE 10 2007 014878 sont aussi connus.

Le document US 2013/057427 décrit un système de détection d'obstacles d'un véhicule muni de deux détecteurs d'obstacles latéraux. Le système de détection d'obstacles présente un mode de test par rebouclage interne.

Le DE 10 2005 003969 décrit un système de détection d'obstacles d'un véhicule muni de détecteurs d'obstacles mettant en oeuvre une méthode statistique de comptage du nombre de détection.

La présente invention a alors pour objet de proposer un véhicule muni d'un système de détection d'obstacles visant à répondre à des critères opérationnels de sûreté de fonctionnement.

L'invention concerne donc un système de détection d'obstacles destiné à un véhicule, ce véhicule s'étendant longitudinalement le long d'un plan antéropostérieur de symétrie d'une extrémité arrière vers une extrémité avant, ce véhicule s'étendant transversalement d'un premier côté vers un deuxième côté situés de part et d'autre du plan antéropostérieur, le système de détection d'obstacles comportant au moins un détecteur d'obstacles à figure de balayage réalisant une détection dans un champ dit « champ de vue ».

Ce système de détection d'obstacles comporte au moins un détecteur d'obstacles dit « premier détecteur d'obstacles » réalisant une détection dans un premier champ de vue et un détecteur d'obstacles dit « deuxième détecteur d'obstacles » réalisant une détection dans un deuxième champ de vue, le premier détecteur d'obstacles étant destiné à être agencé du premier côté du véhicule et le deuxième détecteur d'obstacles étant destiné à être agencé du deuxième côté du véhicule, le premier champ de vue et le deuxième champ de vue se recoupant dans un champ de vue commun durant au moins un mode de fonctionnement pour permettre la vérification du fonctionnement du système de détection d'obstacles lorsqu'un obstacle est détecté dans le champ de vue commun.

L'expression « champ de vue » désigne un secteur de l'espace balayé par un détecteur d'obstacles. Par suite, le premier champ de vue désigne un secteur de l'espace balayé par le premier détecteur d'obstacles, et le deuxième champ de vue désigne un secteur de l'espace balayé par le deuxième détecteur d'obstacles.

L'expression « champ de vue commun » désigne un secteur de l'espace balayé par le premier détecteur d'obstacles et le deuxième détecteur d'obstacles.

L'expression « détecteur d'obstacles à figure de balayage » désigne un détecteur d'obstacles qui émet un signal de détection prenant la forme géométrique d'une figure dite « figure de balayage ». Cette figure peut posséder diverses formes, tel qu'un segment de droite, un cercle, un segment ondulé....

Le système de détection d'obstacles n'est donc pas muni d'un détecteur d'obstacles mais d'au moins deux détecteurs d'obstacles. Le premier détecteur d'obstacles et le deuxième détecteur d'obstacles sont décalés au moins transversalement pour scruter deux zones différentes de l'espace environnant, au travers d'un premier champ de vue et d'un deuxième champ de vue différents.

Néanmoins, le premier champ de vue et le deuxième champ de vue se recoupent partiellement au niveau d'un champ de vue commun.

L'utilisation de deux détecteurs d'obstacles n'est pas évidente. En effet, un détecteur d'obstacles notamment sur un aéronef présente un coût et une masse importants. Dès lors, l'implantation de deux détecteurs d'obstacles peut être considérée comme aberrante d'un point de vue financier et massique.

Cependant, l'invention ne se contente pas de doubler les détecteurs d'obstacles. En effet, le premier champ de vue et le deuxième champ se recoupent au niveau du champ de vue commun. Cette caractéristique permet au système de détection d'obstacles de vérifier le bon fonctionnement des détecteurs d'obstacles lorsqu'un objet est repéré dans le champ de vue commun par comparaison des mesures effectuées par le premier détecteur d'obstacles et le deuxième détecteur d'obstacles.

Par suite, si le système de détection d'obstacles selon l'invention s'avère potentiellement plus lourd et onéreux qu'un système comprenant un unique détecteur, ce système de détection d'obstacles offre la possibilité de vérifier son fonctionnement, cet avantage pouvant être intéressant d'un point de vue opérationnel.

Dès lors, le système de détection d'obstacles de l'invention présente une sureté de fonctionnement intéressante.

En outre, le premier champ de vue et le deuxième champ de vue se recoupent partiellement au niveau du champ de vue commun. Par suite, le premier champ de vue et le deuxième champ de vue peuvent couvrir conjointement un champ de vue total pouvant être relativement étendu en site et/ou en gisement.

Par ailleurs, le premier détecteur d'obstacles et le deuxième détecteur d'obstacles comprennent respectivement un premier émetteur émettant un premier signal de détection et un deuxième émetteur émettant un deuxième signal de détection, le premier détecteur d'obstacles et le deuxième détecteur d'obstacles comprenant respectivement un premier récepteur recevant un premier signal de réception et un deuxième récepteur recevant un deuxième signal de réception lorsque le premier signal de détection et le deuxième signal de détection impactent un obstacle. Le système de détection d'obstacles comporte une unité d'analyse qui effectue une comparaison du premier signal de réception et du deuxième signal de réception lorsque le premier détecteur d'obstacles et le deuxième détecteur d'obstacles pointent un même obstacle présent dans le champ de vue commun, l'unité d'analyse communiquant avec une unité de signalement pour signaler un dysfonctionnement si un résultat de la comparaison n'est pas conforme à un critère de comparaison prédéterminé.

L'unité d'analyse peut comprendre un système électronique ayant notamment pour fonction de comparer le premier signal de réception et le deuxième signal de réception pour déterminer si un des détecteurs d'obstacles est défaillant. L'unité d'analyse est reliée à une unité de signalement qui a pour fonction de signaler la défaillance éventuelle d'un détecteur d'obstacles. L'unité de signalement peut comprendre un système électronique muni d'un avertisseur visuel ou sonore.

Le système de détection d'obstacles peut de plus comporter une ou plusieurs des caractéristiques qui suivent.

Ainsi, le champ de vue commun peut être destiné à être agencé devant ladite extrémité avant du véhicule.

Ce champ de vue commun est localisé à l'avant du véhicule pour optimiser la détection d'un obstacle potentiellement dangereux lors de l'avancement du véhicule muni du système de détection d'obstacles.

Par ailleurs, le premier détecteur d'obstacles et le deuxième détecteur d'obstacles sont éventuellement à choisir dans une liste comprenant au moins un des détecteurs d'obstacles suivant : un détecteur RADAR, un détecteur LIDAR.

Chaque détecteur d'obstacles peut être un détecteur muni d'un moyen d'émission et d'un moyen de réception. Le moyen d'émission émet un signal de détection radar ou lumineux susceptible d'être réfléchi par un obstacle vers le moyen de réception.

Par suite, chaque détecteur d'obstacles peut être un détecteur RADAR ou LIDAR, favorablement muni d'un moyen pour mesurer une puissance crête du signal réfléchi par un obstacle.

Un détecteur d'obstacles peut être par exemple un détecteur d'obstacles HELLAS ™ de la société Airbus Space & Defense.

Le premier détecteur d'obstacles et le deuxième détecteur d'obstacles peuvent favorablement être identiques pour faciliter la détection d'un dysfonctionnement éventuel d'au moins un des détecteurs d'obstacles.

En particulier, le premier détecteur d'obstacles et le deuxième détecteur d'obstacles pouvant être identiques, le premier détecteur d'obstacles et le deuxième détecteur d'obstacles comprennent favorablement chacun un dispositif de mesure mesurant la puissance crête d'un signal de réception reçu.

L'expression « le premier détecteur d'obstacles et le deuxième détecteur d'obstacles étant identiques » signifie que le premier détecteur d'obstacles et le deuxième détecteur d'obstacles représente le même appareil, par exemple un même détecteur d'obstacles RADAR.

Pour effectuer ladite comparaison, l'unité d'analyse compare alors un premier quotient d'une première puissance crête nominale du premier détecteur d'obstacles et d'une puissance crête d'un premier signal de réception du premier détecteur d'obstacles, et un deuxième quotient d'une deuxième puissance crête nominale du deuxième détecteur d'obstacles et d'une deuxième puissance crête d'un deuxième signal de réception du deuxième détecteur d'obstacles.

La première puissance crête nominale et la deuxième puissance crête nominale sont des données mémorisées. En effet, le premier détecteur d'obstacles et le deuxième détecteur d'obstacles sont calibrés afin de déterminer la première puissance crête nominale et la deuxième puissance crête nominale.

La première puissance crête nominale et la deuxième puissance crête nominale sont par exemples identiques et fournies par le constructeur, voire différentes et déterminées suite à des mesures réalisées en laboratoire.

Par exemple, un dysfonctionnement est signalé si le premier quotient est égal au deuxième quotient plus ou moins une marge de précision.

Pour un détecteur d'obstacles LIDAR à impulsions, la puissance crête du signal de réception reçu peut être déterminée à l'aide d'une relation mathématique ayant la forme suivante pour une cible résolue à (cible plus grande que le faisceau laser) :

$$S = P*K*\rho*T(R)*/f(R)$$

où "S" représente la puissance crête du signal de réception, « P » représente la puissance crête nominale de l'impulsion émise par le détecteur d'obstacles LIDAR, « $\rho$ » représente l'albédo de l'obstacle détecté à savoir son coefficient de réflexion, « K » représente une constante de conception du détecteur d'obstacles, « f(R) » représente une fonction relative à la distance séparant l'obstacle du détecteur d'obstacles, « T (R)» représente la transmission atmosphérique de l'air ambiant image de la visibilité relative à la distance séparant l'obstacle du détecteur d'obstacles, « * » représente le signe de la multiplication, « / » représente le signe de la division, « = » représente le signe de l'égalité.

Eventuellement, cette relation prend la forme suivante pour un détecteur d'obstacles RADAR à impulsions :

$$\mathrm{Pr} = Pt\ K\ \sigma\ f(R)$$

où « K « représente une constante de conception du RADAR, « Pr « une puissance crête du signal de réception (watts), « Pt « représente une puissance crête nominale de l'impulsion émise par le détecteur d'obstacles RADAR (watts), « $\sigma$ « représente une: section efficace ou surface équivalente radar, « F(R) » représente une fonction dépendant de la distance cible-RADAR.

Pour un même obstacle et deux détecteurs d'obstacles identiques et calibrés, le premier quotient et le deuxième quotient doivent donc être sensiblement équivalents puisque les valeurs des premier et deuxième quotients dépendent de l'obstacle repéré.

Par suite, le premier quotient et le deuxième quotient peuvent être comparés lorsqu'un obstacle est détecté dans le champ commun. Si le premier quotient diffère fortement du deuxième quotient, le système de détection d'obstacles peut en déduire qu'un moins un des détecteurs d'obstacles est défaillant.

Le dysfonctionnement est signalé à un pilote pour sécuriser le vol.

Pour minimiser les erreurs de mesure, le calcul du premier quotient et le calcul du deuxième quotient peuvent se faire sur un ensemble de mesures durant un temps d'intégration par exemple de quelques secondes. En l'absence d'obstacle de type câble, le calcul des quotients peut se faire en visant une surface au sol vue par les deux détecteurs d'obstacles.

Par ailleurs, le système de détection d'obstacles peut comporter une unité de traitement reliée au premier détecteur d'obstacles et au deuxième détecteur d'obstacles pour déterminer une valeur de visibilité lorsqu'un obstacle est détecté.

L'unité de traitement peut comporter une unité électronique. L'unité de traitement et l'unité d'analyse peuvent constituer une seule et même unité électronique.

Chaque relation mathématique citée précédemment comporte deux inconnues, à savoir l'albédo de l'obstacle et la transmission atmosphérique de l'air ambiant pour la relation associée à un détecteur d'obstacles de type LIDAR.

En effet, le détecteur d'obstacles est classiquement à même de déterminer la fonction relative à la distance séparant l'obstacle du détecteur d'obstacles à partir d'un signal de détection émis par ce détecteur d'obstacles et du signal réfléchi par l'obstacle.

De manière alternative, le système de détection d'obstacles est étalonné vis-à-vis d'un obstacle normalisé de façon à déterminer avant le vol du véhicule les puissances et les sensibilités de détection des deux chaînes de détection d'obstacles.

Pour chaque détecteur d'obstacles, l'unité de traitement établit une équation à deux inconnues. Avec le premier détecteur d'obstacles et le deuxième détecteur d'obstacles, l'unité de traitement obtient alors un système de deux équations à deux inconnues pouvant être aisément résolu.

Par suite, la valeur de visibilité résultant de la résolution de ce système de deux équations à deux inconnues peut être affichée afin que le pilote adapte la vitesse d'avancement de l'aéronef en fonction de la visibilité courante.

De plus, si une valeur de visibilité aberrante est affichée, un individu peut considérer que le système de détection d'obstacles est défaillant.

L'unité de traitement peut aussi afficher une vitesse d'avancement à respecter qui est fonction de la visibilité courante. Par exemple, un tableau de conversion ou une base de données voire une formule mathématique déterminée par essais ou simulations permettent à l'unité de traitement de déduire la vitesse d'avancement à respecter en fonction de la visibilité.

De manière alternative ou complémentaire, l'unité de traitement peut coopérer avec un moyen de saisie, tel qu'un clavier par exemple, permettant à un pilote de paramétrer manuellement la valeur de visibilité.

Par ailleurs, le système de détection d'obstacles peut comporter au moins un actionneur dit « actionneur en site » modifiant un angle de site d'au moins desdits premier détecteur d'obstacles et deuxième détecteur d'obstacles.

Le terme « actionneur » peut désigner un moteur électrique par exemple, ou un vérin.

Eventuellement, le système de détection d'obstacles comporte un système d'asservissement dudit actionneur en site pour remplir au moins une des fonctions suivantes :

- compenser une variation d'assiette longitudinale du véhicule pour détecter un obstacle dans un plan prédéterminé,

- balayer un champ de vue total supérieur au champ de vue balayé par un desdits premier et deuxième détecteurs d'obstacles coopérant avec l'actionneur en site,

Le système d'asservissement a pour fonction de régler l'angle de site d'un détecteur d'obstacles au travers d'un actionneur en site. Le système d'asservissement peut être intégré à l'actionneur en site ou déporté par rapport à cet actionneur en site. Le système d'asservissement peut comprendre une unité électronique apte à commander la position de l'actionneur en site. De plus, le système d'asservissement peut éventuellement comprendre des moyens de mesure d'une assiette longitudinale de l'aéronef, et/ou des moyens de mesure d'une vitesse d'avancement de l'aéronef.

Ainsi, le premier détecteur d'obstacles et le deuxième détecteur d'obstacles peuvent toujours être montés sur un actionneur en site et avantageusement asservis en site pour compenser les variations d'assiettes longitudinales de façon à avoir un balayage de détection dans un plan, par exemple un plan horizontal perpendiculaire à la pesanteur. Lorsque l'assiette longitudinale du véhicule est modifiée, chaque actionneur en site est contrôlé pour modifier le site du premier détecteur d'obstacles et le site du deuxième détecteur d'obstacles.

Le système d'asservissement d'un actionneur en site peut aussi viser à optimiser le champ de vue couvert par un détecteur d'obstacles.

Par exemple, le détecteur d'obstacles balaie un champ de vue instantané de 20°x20° par exemple. L'asservissement en site du détecteur d'obstacles permet par exemple d'augmenter le champ de vue total à 40° x 20°, dans le cas d'un débattement en site de 20° du détecteur d'obstacles via un actionneur en site d'asservissement en site. Cet asservissement peut permettre une détection d'obstacles avec des assiettes en tangage importantes.

En asservissant en site un détecteur d'obstacles, l'invention permet aussi d'optimiser le champ de vue couvert en utilisant un détecteur d'obstacles simplifié.

Par exemple, un détecteur d'obstacles peut émettre un signal de détection selon une figure de balayage de type cercle ou ligne droite. Le détecteur d'obstacles peut alors comprendre des dispositifs optiques complexes pour balayer une surface, telle qu'un disque.

Selon l'invention, un actionneur en site d'asservissement en site peut permettre d'utiliser un détecteur d'obstacles dépourvu d'un dispositif optique complexe de ce type pour couvrir une surface.

Le système de détection d'obstacles peut aussi comporter au moins un actionneur dit « actionneur en gisement » pour déplacer en rotation, autour d'un axe en élévation destiné à être parallèle au plan antéropostérieur, au moins un desdits premier détecteur d'obstacles et deuxième détecteur d'obstacles.

Chaque actionneur en gisement peut asservir en gisement la position d'un détecteur d'obstacles. Un tel détecteur d'obstacles peut alors être asservi en site par un actionneur en site et en gisement par un actionneur en gisement.

Par ailleurs, le premier détecteur d'obstacles et le deuxième détecteur d'obstacles peuvent se déplacer selon des directions contraires en gisement à l'aide d'actionneurs en gisement dans au moins un mode de fonctionnement.

En outre, le premier détecteur d'obstacles et le deuxième détecteur d'obstacles peuvent être agencés dos à dos, le premier champ de vue et le deuxième champ de vue étant chacun supérieur à 180 degrés pour se recouper au niveau dudit champ de vue commun.

Une telle disposition permet de couvrir un large champ de vue totale.

Selon un autre aspect, le système de détection d'obstacles peut comporter un moyen de mesure d'une vitesse d'avancement dudit véhicule, ledit premier champ de vue et ledit deuxième champ de vue étant fonction de ladite vitesse d'avancement.

Par exemple, l'actionneur en gisement contrôlant un détecteur d'obstacles en gisement ou un dispositif optique d'un détecteur d'obstacles sont contrôlés par un contrôleur électronique en fonction de la vitesse d'avancement.

Ainsi, le premier champ de vue et le deuxième champ de vue peuvent être réduits lorsque la vitesse d'avancement du véhicule augmente.

A l'inverse, durant un mode de fonctionnement à basse vitesse, le premier champ de vue et le deuxième champ de vue peuvent être maximisés pour couvrir un espace de 360 degrés autour du véhicule.

L'invention concerne de plus un véhicule s'étendant longitudinalement le long d'un plan antéropostérieur de symétrie d'une extrémité arrière vers une extrémité avant, le véhicule s'étendant transversalement d'un premier côté vers un deuxième côté situés de part et d'autre du plan antéropostérieur.

Ce véhicule comporte alors un système de détection d'obstacles selon l'invention, le premier détecteur d'obstacles étant agencé dudit premier côté et le deuxième détecteur d'obstacles étant agencé dudit deuxième côté.

Le véhicule peut en particulier être un aéronef, et notamment un giravion.

Par exemple, le véhicule comprenant une première surface aérodynamique agencée du premier côté et une deuxième surface aérodynamique agencée du deuxième côté, le premier détecteur d'obstacles est porté par la première surface aérodynamique et le deuxième détecteur d'obstacles est porté par la deuxième surface aérodynamique.

A titre illustratif, le premier détecteur d'obstacles et le deuxième détecteur d'obstacles sont situés sous des points d'emport en lieu et place de déclencheurs d'armement axiaux asservis en site.

Dans une autre configuration, le premier détecteur d'obstacles et le deuxième détecteur d'obstacles sont montés sur une tourelle avec un champ de vue en gisement supérieur à 180 degrés.

L'invention vise aussi un procédé de détection d'obstacles à bord d'un tel véhicule.

Ce procédé comporte les étapes suivantes :

- détection d'un obstacle dans le champ de vue commun par le premier détecteur d'obstacles et le deuxième détecteur d'obstacles,

- vérification du bon fonctionnement du système de détection d'obstacles suite à ladite détection d'un obstacle dans le champ de vue commun en effectuant une comparaison dudit premier signal de réception (102) et dudit deuxième signal de réception (202) lorsque le premier détecteur d'obstacles (15) et le deuxième détecteur d'obstacles (16) pointent un même obstacle présent dans ledit champ de vue commun (700).

Le procédé peut de plus comporter une étape de déclenchement d'une alerte, l'alerte étant générée si un dysfonctionnement est détecté.

Eventuellement, le premier détecteur d'obstacles et le deuxième détecteur d'obstacles émettant un premier signal de détection et un deuxième signal de détection, le premier détecteur d'obstacles et le deuxième détecteur d'obstacles recevant respectivement un premier signal de réception et un deuxième signal de réception lorsque le premier signal de détection et le deuxième signal de détection impactent un obstacle, ladite vérification est réalisée en réalisant les étapes suivantes :

- détermination d'un premier quotient d'une première puissance crête nominale et d'une puissance crête d'un premier signal de réception,

- détermination d'un deuxième quotient d'une deuxième puissance crête nominale et d'une deuxième puissance crête d'un deuxième signal de réception du deuxième détecteur d'obstacles

- comparaison du premier quotient et du deuxième quotient pour vérifier qu'un critère de comparaison est rempli.

L'invention et ses avantages apparaîtront avec plus de détails dans le cadre de la description qui suit avec des exemples donnés à titre illustratif en référence aux figures annexées qui représentent :

- la figure 1, une vue d'un véhicule de type aéronef selon l'invention,

- la figure 2, une vue d'un véhicule muni de détecteurs d'obstacles agencés dos à dos,

- les figures 3 à 5, des vues explicitant l'optimisation des champs de vue par un asservissement en site et en gisement, et

- la figure 6, une vue explicitant des étapes du procédé selon l'invention.

Les éléments présents dans plusieurs figures distinctes sont affectés d'une seule et même référence.

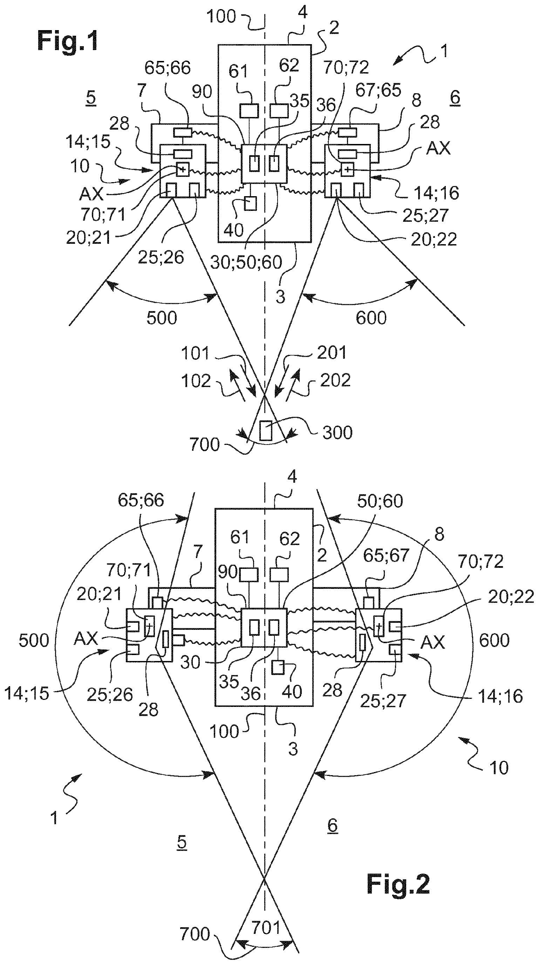

La figure 1 présente un véhicule 1 selon l'invention. Ce véhicule peut être par exemple une automobile, un véhicule maritime ou un aéronef. Notamment, le véhicule peut être un giravion.

Le véhicule 1 s'étend le long d'un plan antéropostérieur 100 de symétrie d'une extrémité arrière 4 vers une extrémité avant 3. Par exemple, un fuselage d'un aéronef s'étend d'une queue vers un nez.

De plus, ce véhicule 1 s'étend transversalement de part et d'autre de ce plan antéropostérieur d'un premier côté 5 vers un deuxième côté 6. Par exemple, le premier côté 5 peut être qualifié de côté gauche et le deuxième côté de côté droit en raison de leur position sur la figure 1.

Enfin, le véhicule s'étend en élévation d'une extrémité inférieure en regard du sol vers une extrémité supérieure.

Le véhicule peut être muni d'une première surface aérodynamique 7 agencée du premier côté 5 et une deuxième surface aérodynamique 8 agencée du deuxième côté 6. La première surface aérodynamique 7 et la deuxième surface aérodynamique 8 peuvent former conjointement une aile continue ou discontinue, voire peuvent représenter des ailettes d'emport aptes à porter divers équipements.

De plus, ce véhicule comporte un système de détection d'obstacles 10 pour déterminer la présence éventuelle d'obstacles 300.

Le système de détection d'obstacles 10 comporte au moins deux détecteur d'obstacles 14. Ainsi, le système de détection d'obstacles 10 comporte un détecteur d'obstacles 14 dit « premier détecteur d'obstacles 15 » et un détecteur d'obstacles 14 dit « deuxième détecteur d'obstacles 16 ».

Le premier détecteur d'obstacles 15 et le deuxième détecteur d'obstacles 16 sont décalés l'un par rapport à l'autre au moins transversalement. Ainsi, le premier détecteur d'obstacles 15 est agencé du premier côté 5 du véhicule, alors que le deuxième détecteur d'obstacles 16 est agencé du deuxième côté 6. Par exemple, le premier détecteur d'obstacles 15 est porté par la première surface aérodynamique 7, et le deuxième détecteur d'obstacles 16 est porté par la deuxième surface aérodynamique 8.

Chaque détecteur d'obstacles 14 est pourvu d'un émetteur 20 émettant un signal de détection dans un champ de vue prenant la une forme dite « figure de balayage », et un récepteur 25 recevant un signal de réception lorsque le signal de détection est réfléchi par un obstacle.

Dès lors, chaque détecteur d'obstacles peut être un détecteur RADAR ou LIDAR.

De plus, chaque détecteur d'obstacles 14 est pourvu d'un dispositif de mesure 28 usuel pour traiter le signal de réception reçu afin de déterminer la position de l'objet repéré. Un tel dispositif de mesure peut comprendre par exemple un processeur, un circuit intégré, un système programmable, un circuit logique...

De plus, le dispositif de mesure 28 peut déterminer la puissance crête du signal de réception reçu.

Le premier détecteur d'obstacles 15 et le deuxième détecteur d'obstacles 16 sont favorablement identiques en représentant un même modèle.

Plus précisément, le premier détecteur d'obstacles 15 permet de scruter un secteur de l'espace entourant le véhicule dénommé « premier champ de vue 500 ». Le deuxième détecteur d'obstacles 16 permet de scruter un secteur de l'espace entourant le véhicule dénommé « deuxième champ de vue 600 ». Le deuxième champ de vue 600 est différent du premier champ de vue 500. Néanmoins, le premier champ de vue 500 et le deuxième champ de vue 600 se chevauchent localement dans un secteur de l'espace dénommé « champ de vue commun 700 ».

Favorablement, le champ de vue commun est situé devant le véhicule, l'extrémité avant étant alors disposée entre le champ de vue commun et l'extrémité arrière du véhicule.

Selon le premier mode de réalisation de la figure 1, le premier détecteur d'obstacles 15 et le deuxième détecteur d'obstacles 16 sont dirigés vers l'avant du véhicule.

Selon le deuxième mode de réalisation de la figure 2, le premier détecteur d'obstacles 15 et le deuxième détecteur d'obstacles 16 sont disposés dos à dos en étant par exemple portés par une tourelle.

Le premier champ de vue 500 et le deuxième champ de vue 600 sont supérieurs à 180 degrés pour se recouper au niveau du champ de vue commun 700. Ce champ du vue commun présente un champ de vue avant 701 situé devant le véhicule et un champ de vue arrière non référencé situé derrière le véhicule.

Cette disposition permet de scruter un champ de vue à 360 degrés entourant le véhicule, en particulier lors d'un vol en stationnaire d'un giravion.

Dès lors et en référence à la figure 1, le premier détecteur d'obstacles 15 comporte un premier émetteur 21 qui émet un premier signal de détection 101 radar ou lumineux dans le premier champ de vue 500. Si le premier signal de détection 101 impacte un objet, cet objet réfléchit un premier signal de réception 102 reçu par le premier récepteur 26 et traité un dispositif de mesure 28.

De même, le deuxième détecteur d'obstacles 16 comporte un deuxième émetteur 22 qui émet un deuxième signal de détection 201 radar ou lumineux dans le deuxième champ de vue 600. Si le deuxième signal de détection 201 impacte un objet, cet objet réfléchit un deuxième signal de réception 202 reçu par le deuxième récepteur 27 et traité par un dispositif de mesure 28.

En outre, le système de détection d'obstacles 10 peut comporter au moins un actionneur en site 65 qui a pour fonction de modifier un angle de site d'au moins un des premier détecteur d'obstacles 15 et deuxième détecteur d'obstacles 16.

Ainsi, un actionneur en site 65 dit « premier actionneur en site 66 » permet de modifier l'angle de site du premier détecteur d'obstacles 15, et /ou un actionneur en site 65 dit « deuxième actionneur en site 67 » permet de modifier l'angle de site du deuxième détecteur d'obstacles 16.

Un système d'asservissement 60 permet de contrôler les actionneurs en site 65. Le système d'asservissement 60 peut comprendre par exemple un processeur, un circuit intégré, un système programmable, un circuit logique, ces exemples ne limitant pas la portée donnée à l'expression « système d'asservissement 60 ».

Le système d'asservissement 60 peut communiquer avec un premier moyen de mesure 61 mesurant une vitesse d'avancement du véhicule. Le premier moyen de mesure 61 peut par exemple prendre la forme d'un système usuel mesurant une vitesse dite « true air speed » en langue anglaise, tel qu'un système anémobarométrique ou un système de positionnement connu sous l'acronyme GPS.

Le système d'asservissement 60 peut aussi communiquer avec un deuxième moyen de mesure 62 mesurant une assiette longitudinale du véhicule, tel qu'une centrale inertielle ou un inclinomètre par exemple. Le deuxième moyen de mesure 62 peut aussi prendre la forme d'une centrale inertielle par exemple.

Un tel système d'asservissement 60 permet par exemple de compenser une variation d'assiette longitudinale du véhicule 1 pour détecter un obstacle dans un plan prédéterminé. L'angle de site d'un détecteur d'obstacles est par exemple réglé pour maintenir la détection d'obstacles dans un plan particulier. Par exemple, lorsque le mouvement d'un véhicule est à cabrer, le système d'asservissement requiert un mouvement à piquer des détecteurs d'obstacles pour compenser ce mouvement à cabrer.

Un tel système d'asservissement 60 permet aussi de balayer un champ de vue total supérieur au champ de vue balayé par un desdits premier et deuxième détecteurs d'obstacles coopérant avec l'actionneur en site 65.

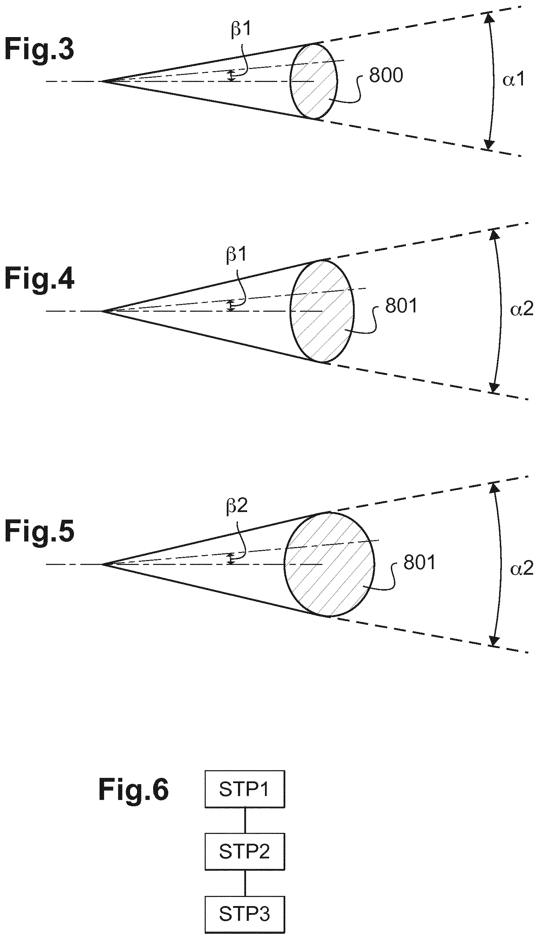

En référence à la figure 3, un détecteur d'obstacles peut balayer un champ de vue 800 s'étendant en site sur une première angulation en site a1, et en gisement sur une première angulation en gisement β1. Selon la figure 1, le détecteur d'obstacles couvre à chaque instant une figure de balayage pleine. Cependant, le détecteur d'obstacles peut décrire une figure de balayage qui présente uniquement une ligne fermée ou ouverte.

En référence à la figure 4, un actionneur en site peut être utilisé pour balayer un champ de vue total 801 s'étendant en site sur une deuxième angulation en site a2 supérieure à la première angulation en site α1.

L'amplitude du balayage en site peut être adaptée en fonction de la vitesse d'avancement de l'aéronef en appliquant des relations prédéterminées par le constructeur.

De même et en référence à la figure 1, le système de détection d'obstacles 10 peut comporter au moins un actionneur en gisement 70. Chaque actionneur en gisement 70 déplace en rotation au moins un desdits premier détecteur d'obstacles 15 et deuxième détecteur d'obstacles 16 autour d'un axe en élévation AX destiné à être parallèle au plan antéropostérieur 100.

Ce déplacement permet d'optimiser le champ de vue balayé.

Par exemple et en référence à la figure 5, un actionneur en gisement peut être utilisé pour balayer un champ de vue 802 s'étendant en gisement sur une deuxième angulation en gisement β2 supérieure à la première angulation en gisement β1.

En référence à la figure 2, le premier détecteur d'obstacles 15 et le deuxième détecteur d'obstacles 16 peuvent se déplacer en gisement selon des directions contraires.

Durant un mode de fonctionnement surveillé, le champ de vue commun 700 scruté permet à une unité d'analyse 30 de déterminer si le premier détecteur d'obstacles et le deuxième détecteur d'obstacles fonctionnent correctement.

L'unité d'analyse 30 peut comprendre par exemple un processeur, un circuit intégré, un système programmable, un circuit logique, ces exemples ne limitant pas la portée donnée à l'expression « unité d'analyse ».

Selon la figure 1, un calculateur comporte un processeur 35 et une mémoire 36, le processeur 35 exécutant des instructions mémorisées dans la mémoire 36. L'unité d'analyse 30 peut prendre la forme du processeur 35 et de lignes d'instructions de la mémoire 36.

Cette unité d'analyse peut communiquer avec une unité de signalement 40 apte à signaler un dysfonctionnement. L'unité de signalement 40 peut comporter un moyen d'alerte visuel, sonore et/ou ou haptique générant une alerte lorsque l'unité d'analyse 30 transmet un signal prédéterminé à l'unité de signalement 40.

Par ailleurs, le système de détection d'obstacles 10 peut comprendre une unité de traitement 50 pour déterminer une valeur de visibilité. L'unité de traitement 50 peut comprendre par exemple un processeur, un circuit intégré, un système programmable, un circuit logique, ces exemples ne limitant pas la portée donnée à l'expression « unité de traitement ».

L'unité d'analyse 30 et/ou l'unité de signalement 40 et/ou l'unité de traitement 50 et/ou le système d'asservissement 60 peuvent former un seul et même équipement muni d'au moins un processeur et d'une mémoire par exemple.

Selon le procédé de l'invention, chaque détecteur d'obstacles est utilisé de manière usuelle pour signaler un obstacle à un pilote via des équipements adaptés non représentés.

Par contre et en référence à la figure 6, le procédé selon l'invention permet de vérifier que les détecteurs d'obstacles fonctionnement correctement.

Dès lors, ce procédé comporte une première étape de détection STP1 d'un obstacle dans le champ de vue commun 700 par le premier détecteur d'obstacles 15 et le deuxième détecteur d'obstacles 16.

Lorsqu'un obstacle est détecté dans le champ de vue commun, cet obstacle est signalé à l'équipage.

De plus, l'unité d'analyse est sollicitée durant une étape de vérification STP2 du bon fonctionnement du système de détection d'obstacles 10.

Dès lors, l'unité d'analyse 30 détermine la valeur d'un premier quotient d'une première puissance crête nominale P1 du premier détecteur d'obstacles 15 et d'une puissance crête S1 d'un premier signal de réception 102 reçu par le premier détecteur d'obstacles 15.

De même, l'unité d'analyse détermine la valeur d'un deuxième quotient d'une deuxième puissance crête nominale P2 du deuxième détecteur d'obstacles 16 et d'une deuxième puissance crête S2 d'un deuxième signal de réception 202 reçu par le deuxième détecteur d'obstacles 16.

Par exemple, l'unité d'analyse utilise une pluralité de points de mesure selon une analyse statistique pour déterminer la première puissance crête et la deuxième puissance crête.

Dès lors et durant une phase de comparaison, l'unité d'analyse compare le premier quotient et le deuxième quotient pour vérifier qu'un critère de comparaison est rempli.

Par exemple, l'unité d'analyse détermine si le premier quotient est sensiblement égal au deuxième quotient.

Dans la négative, l'unité d'analyse en déduit qu'au moins un détecteur d'obstacles ne fonctionne pas correctement.

Dès lors, l'unité d'analyse en informe un pilote via l'unité de signalement.

En outre, à partir du premier quotient et du deuxième quotient, l'unité de traitement peut résoudre un système d'équations à deux équations pour déterminer une valeur de la visibilité courante. Cette valeur de visibilité est éventuellement affichée sur un afficheur, et/ou transformée en une valeur de vitesse d'avancement du véhicule à respecter qui est affichée sur un afficheur.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Système de détection d'obstacles (10) destiné à un véhicule (1), ledit véhicule (1) s'étendant longitudinalement le long d'un plan antéropostérieur (100) de symétrie d'une extrémité arrière (4) vers une extrémité avant (3), ledit véhicule (1) s'étendant transversalement d'un premier côté (5) vers un deuxième côté (6) situés de part et d'autre dudit plan antéropostérieur (100), ledit système de détection d'obstacles (10) comportant au moins un détecteur d'obstacles (14) à figure de balayage réalisant une détection dans un champ de vue,

   **caractérisé en ce que** ledit système de détection d'obstacles (10) comporte au moins un détecteur d'obstacles dit « premier détecteur d'obstacles (15) » réalisant une détection dans un premier champ de vue (500) et un détecteur d'obstacles dit « deuxième détecteur d'obstacles (16) » réalisant une détection dans un deuxième champ de vue (600), le premier détecteur d'obstacles (15) étant destiné à être agencé dudit premier côté (5) et le deuxième détecteur d'obstacles (16) étant destiné à être agencé dudit deuxième côté (6), le premier champ de vue (500) et le deuxième champ de vue (600) se recoupant dans un champ de vue commun (700) durant au moins un mode de fonctionnement pour permettre la vérification du fonctionnement du système de détection d'obstacles (10) lorsqu'un obstacle est détecté dans le champ de vue commun (700), le premier détecteur d'obstacles (15) et le deuxième détecteur d'obstacles (16) comprennent respectivement un premier émetteur (21) émettant un premier signal de détection (101) et un deuxième émetteur (22) émettant un deuxième signal de détection (201), le premier détecteur d'obstacles (15) et le deuxième détecteur d'obstacles (16) comprenant respectivement un premier récepteur (26) recevant un premier signal de réception (102) et un deuxième récepteur (27) recevant un deuxième signal de réception (202) lorsque le premier signal de détection (101) et le deuxième signal de détection (201) impactent un obstacle (300), ledit système de détection d'obstacles (10) comportant une unité d'analyse (30) qui effectue une comparaison dudit premier signal de réception (102) et dudit deuxième signal de réception (202) lorsque le premier détecteur d'obstacles (15) et le deuxième détecteur d'obstacles (16) pointent un même obstacle présent dans ledit champ de vue commun (700), ladite unité d'analyse (30) communiquant avec une unité de signalement (40) pour signaler un dysfonctionnement si un résultat de ladite comparaison n'est pas conforme à un critère de comparaison prédéterminé.

2. Système de détection d'obstacles selon la revendication 1,
   **caractérisé en ce que** le premier détecteur d'obstacles (15) et le deuxième détecteur d'obstacles (16) sont à choisir dans une liste comprenant au moins un des détecteurs d'obstacles suivant : un détecteur RADAR, un détecteur LIDAR.

3. Système de détection d'obstacles selon l'une quelconque des revendications 1 à 2,
   **caractérisé en ce que** le champ de vue commun (700) est destiné à être agencé devant ladite extrémité avant (3).

4. Système de détection d'obstacles selon l'une quelconque des revendications 1 à 3,
   **caractérisé en ce que**, le premier détecteur d'obstacles et le deuxième détecteur d'obstacles étant identiques, le premier détecteur d'obstacles (15) et le deuxième détecteur d'obstacles (16) comprennent chacun un dispositif de mesure (28) mesurant la puissance crête d'un signal de réception reçu, pour effectuer ladite comparaison ladite unité d'analyse (30) comparant un premier quotient d'une première puissance crête nominale (P1) et d'une première puissance crête (S1) d'un premier signal de réception (102) du premier détecteur d'obstacles (15) et un deuxième quotient d'une deuxième puissance crête nominale (P2) et d'une deuxième puissance crête (S2) d'un deuxième signal de réception (202) du deuxième détecteur d'obstacles (16).

5. Système de détection d'obstacles selon l'une quelconque des revendications 1 à 4,
   **caractérisé en ce que** ledit système de détection d'obstacles (10) comporte une unité de traitement (50) reliée au premier détecteur d'obstacles (15) et au deuxième détecteur d'obstacles (16) pour déterminer une valeur de visibilité lorsqu'un obstacle est détecté.

6. Système de détection d'obstacles selon l'une quelconque des revendications 1 à 5,
   **caractérisé en ce que** ledit système de détection d'obstacles (10) comporte au moins un actionneur dit « actionneur en site (65) » modifiant un angle de site d'au moins desdits premier détecteur d'obstacles (15) et deuxième détecteur d'obstacles (16).

7. Système de détection d'obstacles selon la revendication 6,
   **caractérisé en ce que** ledit système de détection d'obstacles (10) comporte un système d'asservissement (60) dudit actionneur en site (65) pour remplir au moins une des fonctions suivantes :

   - compenser une variation d'assiette longitudinale du véhicule (1) pour détecter un obstacle dans un plan prédéterminé,
   - balayer un champ de vue total (801) supérieur au champ de vue (800) balayé par un desdits premier et deuxième détecteurs d'obstacles coopérant avec l'actionneur en site (65),

8. Système de détection d'obstacles selon l'une quelconque des revendications 1 à 7,
   **caractérisé en ce que** ledit système de détection d'obstacles (10) comporte au moins un actionneur dit « actionneur en gisement (70) » pour déplacer en rotation, autour d'un axe en élévation (AX) destiné à être parallèle au plan antéropostérieur (100), au moins un desdits premier détecteur d'obstacles (15) et deuxième détecteur d'obstacles (16).

9. Système de détection d'obstacles selon l'une quelconque des revendications 6 à 8,
   **caractérisé en ce que** ledit premier détecteur d'obstacles (15) et le deuxième détecteur d'obstacles (16) se déplacent selon des directions contraires.

10. Système de détection d'obstacles selon l'une quelconque des revendications 1 à 9
    **caractérisé en ce que** le premier détecteur d'obstacles (15) et le deuxième détecteur d'obstacles (16) sont agencés dos à dos, le premier champ de vue (500) et le deuxième champ de vue (600) étant chacun supérieur à 180 degrés pour se recouper au niveau dudit champ de vue commun (700).

11. Système de détection d'obstacles selon l'une quelconque des revendications 1 à 10,
    **caractérisé en ce que** ledit système de détection d'obstacles (10) comporte un moyen de mesure (61) pour mesurer une vitesse d'avancement dudit véhicule (1), ledit premier champ de vue (500) et ledit deuxième champ de vue (600) étant fonction de ladite vitesse d'avancement.

12. Véhicule (1) s'étendant longitudinalement le long d'un plan antéropostérieur (100) de symétrie d'une extrémité arrière (4) vers une extrémité avant (3), ledit véhicule (1) s'étendant transversalement d'un premier côté (5) vers un deuxième côté (6) situé de part et d'autre dudit plan antéropostérieur (100),
    **caractérisé en ce que** ledit véhicule (1) comporte un système de détection d'obstacles (10) selon l'une quelconque des revendications 1 à 11, le premier détecteur d'obstacles (15) étant agencé dudit premier côté (5) et le deuxième détecteur d'obstacles (16) étant agencé dudit deuxième côté (6).

13. Véhicule selon la revendication 12,
    **caractérisé en ce que** ledit véhicule (1) comprenant une première surface aérodynamique (7) agencée du premier côté (5) et une deuxième surface aérodynamique (8) agencée du deuxième côté (6), le premier détecteur d'obstacles (15) est porté par la première surface aérodynamique (7) et le deuxième détecteur d'obstacles (16) est porté par la deuxième surface aérodynamique (8).

14. Mise en oeuvre d'un procédé de détection d'obstacles à bord d'un véhicule selon l'une quelconque des revendications 12 à 13,
    **caractérisé en ce que** ce procédé comporte les étapes suivantes :

    - détection (STP1) d'un obstacle dans le champ de vue commun (700) par le premier détecteur d'obstacles (15) et le deuxième détecteur d'obstacles (16),
    - vérification (STP2) du bon fonctionnement du système de détection d'obstacles (10) suite à ladite détection d'un obstacle dans le champ de vue commun (700) en effectuant une comparaison dudit premier signal de réception (102) et dudit deuxième signal de réception (202) lorsque le premier détecteur d'obstacles (15) et le deuxième détecteur d'obstacles (16) pointent un même obstacle présent dans ledit champ de vue commun (700).

15. Mise en oeuvre d'un procédé selon la revendication 14,
    **caractérisé en ce que** le premier détecteur d'obstacles (15) et le deuxième détecteur d'obstacles (16) émettant un premier signal de détection (101) et un deuxième signal de détection (201), le premier détecteur d'obstacles (15) et le deuxième détecteur d'obstacles (16) recevant respectivement un premier signal de réception (102) et un deuxième signal de réception (202) lorsque le premier signal de détection (101) et le deuxième signal de détection (201) impactent un obstacle (300), ladite vérification (STP2) est réalisé en réalisant les étapes suivantes :

    - détermination d'un premier quotient d'une première puissance crête nominale (P1) et d'une puissance crête (S1) d'un premier signal de réception (102),
    - détermination d'un deuxième quotient d'une deuxième puissance crête nominale (P2) et d'une deuxième puissance crête (S2) d'un deuxième signal de réception (202) du deuxième détecteur d'obstacles (16),

- comparaison du premier quotient et du deuxième quotient pour vérifier qu'un critère de comparaison est rempli.

**Patentansprüche**

1. System zur Erkennung von Hindernissen (10) für ein Fahrzeug (1), wobei das Fahrzeug (1) sich in Längsrichtung entlang einer anteroposterioren Symmetrieebene (100) von einem hinteren Ende (4) zu einem vorderen Ende (3) erstreckt, wobei das Fahrzeug (1) sich in Querrichtung von einer ersten Seite (5) zu einer zweiten Seite (6) erstreckt, die auf der einen und der anderen Seite der anteroposterioren Ebene (100) liegen, wobei das System (10) zur Erkennung von Hindernissen mindestens einen Hindernisdetektor (14) aufweist, der mittels einer Abtastung eine Erkennung in einem Sichtbereich ausführt, **dadurch gekennzeichnet, dass** das System (10) zur Erkennung von Hindernissen mindestens einen Hindernisdetektor, der "erster Hindernisdetektor (15)" genannt wird, aufweist, der eine Erkennung in einem ersten Sichtbereich (500) ausführt und einen Hindernisdetektor, der "zweiter Hindernisdetektor (16)" genannt wird, der eine Erkennung in einem zweiten Sichtbereich (600) ausführt, wobei der erste Hindernisdetektor (15) dazu bestimmt ist auf der ersten Seite (5) angeordnet zu werden und der zweite Hindernisdetektor (16) dazu bestimmt ist auf der zweiten Seite (6) angeordnet zu werden, wobei der erste Sichtbereich (500) und der zweite Sichtbereich (600) sich in einem gemeinsamen Sichtbereich (700) während mindestens eines Betriebsmodus überschneiden, um die Überprüfung des Funktionierens des Systems (10) zur Erkennung von Hindernissen zu ermöglichen, denn ein Hindernis in dem gemeinsamen Sichtbereich (700) erkannt wird, wobei der erste Hindernisdetektor (15) und der zweite Hindernisdetektor (16) jeweils einen ersten Sender (21) aufweisen, der ein erstes Erfassungssignal (101) aussendet und einen zweiten Sender (22), der ein zweites Erfassungssignal (201) aussendet, wobei der erste Hindernisdetektor (15) und der zweite Hindernisdetektor (16) jeweils einen ersten Empfänger (26) aufweisen, der ein erstes Empfangssignal (102) empfängt und ein zweiter Empfänger (27), der ein zweites Empfangssignal (202) empfängt, wenn das erste Erfassungssignal (101) und das zweite Erfassungssignal (201) auf ein Hindernis (300) treffen, wobei das System (10) zur Erfassung von Hindernissen eine Analyseeinheit (30) aufweist, die einen Vergleich des ersten Empfangssignals (102) mit dem zweiten Empfangssignal (202) ausführt, wenn der erste Hindernisdetektor (15) und der zweite Hindernisdetektor (16) sich auf ein selbes Hindernis richten, dass in dem gemeinsamen Sichtbereich (700) liegt, wobei die Analyseeinheit (30) mit einer Meldeeinheit (40) kommuniziert, um eine Funktionsstörung zu melden, wenn ein Ergebnis des Vergleichs nicht mit einem Vorbestimmten Vergleichskriterium konform ist.

2. System zur Erkennung von Hindernissen nach Anspruch 1, **dadurch gekennzeichnet, dass** der erste Hindernisdetektor (15) und der zweite Hindernisdetektor (16) aus einer Liste zu wählen sind, die mindestens folgende Hindernisdetektoren umfasst: einen Radardetektor, einen Lidardetektor.

3. System zur Erkennung von Hindernissen nach einem der Ansprüche 1 bis 2, **dadurch gekennzeichnet, dass** der gemeinsame Sichtbereich (700) dazu bestimmt ist vor dem vorderen Ende (3) angeordnet zu werden.

4. System zur Erkennung von Hindernissen nach einem der Ansprüche 1 bis 3, **dadurch gekennzeichnet, dass** der erste Hindernisdetektor und der zweite Hindernisdetektor identisch sind, wobei der erste Hindernisdetektor (15) und der zweite Hindernisdetektor (16) jeweils eine Messvorrichtung (28) aufweisen, die die Spitzenleistung eines empfangenen Empfangssignals messen, um den Vergleich auszuführen, wobei die Analyseeinheit (30) einen ersten Quotienten einer ersten nominalen Spitzenleistung (P1) und einer ersten Spitzenleistung (S1) eines ersten Empfangssignals (102) des ersten Hindernisdetektors (15) und einem zweiten Quotienten einer zweiten nominalen Spitzenleistung (P2) und einer zweiten Spitzenleistung (S2) eines zweiten Empfangssignals (202) des zweiten Hindernisdetektors (16) vergleicht.

5. System zur Erkennung von Hindernissen nach einem der Ansprüche 1 bis 4, **dadurch gekennzeichnet, dass** das System (10) zur Erkennung von Hindernissen eine Verarbeitungseinheit (50) aufweist, die mit dem ersten Hindernisdetektor (15) und mit dem zweiten Hindernisdetektor (16) verbunden ist, um einen Sichtbarkeitswert zu bestimmen, wenn ein Hindernis erfasst wird.

6. System zur Erkennung von Hindernissen nach einem der Ansprüche 1 bis 5, **dadurch gekennzeichnet, dass** das System (10) zur Erkennung von Hindernissen mindestens ein Stellglied, dass "Vorortstellglied (65)" genannt wird aufweist, dass einen Elevationswinkel mindestens eines des ersten Hindernisdetektors (15) und des zweiten Hindernisdetektors (16), ändert.

7. System zur Erkennung von Hindernissen nach Anspruch 6, **dadurch gekennzeichnet, dass** das System (10) zur Erkennung von Hindernissen ein Regelungssystem (60) des Vorortstellglieds (65) aufweist, um mindestens eine der folgenden Funktionen zu erfüllen:

- Kompensieren einer Längsneigungsänderung des Fahrzeugs (1) um ein Hindernis in einer vorbestimmten Ebene zur erfassen,
- Abtasten eines Gesamtsichtbereichs (801) der größer als der Sichtbereich (800) ist, der von den ersten und zweiten Hindernisdetektoren abgetastet wird, die mit dem Vorortstellglied (65) zusammen wirken.

8. System zur Erkennung von Hindernissen nach einem der Ansprüche 1 bis 7, **dadurch gekennzeichnet, dass** das System (10) zur Erkennung von Hindernissen mindestens ein Stellglied aufweist, dass "Peilungsstellglied (70)" genannt wird, um mindestens einen des ersten Hindernisdetektors (15) und des zweiten Hindernisdetektors (16) um eine in Höhenrichtung ausgerichtete Achse (AX) zu drehen.

9. System zur Erkennung von Hindernissen nach einem der Ansprüche 6 bis 8, **dadurch gekennzeichnet, dass** der erste Hindernisdetektor (15) und der zweite Hindernisdetektor (16) sich entgegengesetzten Richtungen bewegen.

10. System zur Erkennung von Hindernissen nach einem der Ansprüche 1 bis 9, **dadurch gekennzeichnet, dass** der erste Hindernisdetektor (15) und der zweite Hindernisdetektor (16) Rücken an Rücken angeordnet sind, wobei der erste Sichtbereich (500) und der zweite Sichtbereich (600) jeweils größer als 180 Grad sind, damit diese sich im Bereich des gemeinsamen Sichtbereichs (700) überschneiden.

11. System zur Erkennung von Hindernissen nach einem der Ansprüche 1 bis 10, **dadurch gekennzeichnet, dass** das System (10) zu Erkennung von Hindernissen ein Messgerät (61) aufweist zum Messen einer Vortriebsgeschwindigkeit des Fahrzeugs (1), wobei der erste Sichtbereich (500) und der zweite Sichtbereich (600) von der Vortriebsgeschwindigkeit abhängen.

12. Fahrzeug (1) welches sich in Längsrichtung entlang einer anteroposterioren Symmetrieebene (100) von einem hinteren Ende (4) zu einem vorderen Ende (3) erstreckt, wobei das Fahrzeug (1) sich in Querrichtung von einer ersten Seite (5) zu einer zweiten Seite (6) erstreckt, die auf der einen und der anderen Seite der anteroposterioren Ebene (100) liegen, **dadurch gekennzeichnet, dass** das Fahrzeug (1) ein System (10) zur Erkennung von Hindernissen nach einem der Ansprüche 1 bis 11 aufweist, wobei der erste Hindernisdetektor (15) auf der ersten Seite (5) und der zweite Hindernisdetektor (16) auf der zweiten Seite (6) angeordnet ist.

13. Fahrzeug nach Anspruch 12, **dadurch gekennzeichnet, dass** das Fahrzeug (1) eine erste aerodynamische Fläche (7) aufweist, die auf der ersten Seite (5) angeordnet ist und eine zweite aerodynamische Fläche (8), die auf der zweiten Seite (6) angeordnet ist, wobei der erste Hindernisdetektor (15) von der ersten aerodynamischen Fläche (7) getragen wird und der zweite Hindernisdetektor (16) von der zweiten aerodynamischen Fläche (8) getragen wird.

14. Durchführung eines Verfahrens zur Erkennung von Hindernissen an Bord eines Fahrzeugs nach einem der Ansprüche 12 bis 13, **dadurch gekennzeichnet, dass** das Verfahren folgende Schritte aufweist:

- Erfassen (STP1) eines Hindernisses in den gemeinsamen Sichtbereich (700) durch den ersten Hindernisdetektor (15) und den zweiten Hindernisdetektor (16),
- Überprüfen (STP2) des Funktionierens des Systems (10) zur Erkennung von Hindernissen nach der Erfassung eines Hindernisses in dem gemeinsamen Sichtbereich (700), in dem ein Vergleich des ersten Empfangssignals (102) und des zweiten Empfangssignals (202) ausgeführt wird wenn der erste Hindernisdetektor (15) und der zweite Hindernisdetektor (16) auf ein selbes Hindernis zielen, dass in dem gemeinsamen Sichtbereich (700) liegt.

15. Durchführung eines Verfahrens nach Anspruch 14, **dadurch gekennzeichnet, dass** der erste Hindernisdetektor (15) und der zweite Hindernisdetektor (16) ein erstes Erfassungssignal (101) und ein zweites Erfassungssignal (201) aussenden, wobei der erste Hindernisdetektor (15) und der zweite Hindernisdetektor (16) jeweils ein erstes Empfangssignal (102) und ein zweites Empfangssignal (202) empfangen, wenn das erste Erfassungssignal (101) und das zweite Erfassungssginal (201) auf ein Hindernis (300) treffen, wobei die Überprüfung (STP2) ausgeführt wird durch Durchführung der folgenden Schritte:

- Bestimmung eines ersten Quotienten aus einer ersten nominalen Spitzenleistung (P1) und einer Spitzenleistung (S1) eines ersten Empfangssignals (102)
- Bestimmung eines zweiten Quotienten aus einer zweiten nominalen Spitzenleistung (P2) und einer zweiten Spitzenleistung (S2) eines zweiten Empfangssignals (202) des zweiten Hindernisdetektors (16),
- Vergleich des ersten Quotienten mit dem zweiten Quotienten um zu überprüfen ob ein Vergleichskriterium erfüllt ist.

## Claims

1. An obstacle detection system (10) intended for a vehicle (1), said vehicle (1) extending longitudinally along an anteroposterior plane of symmetry (100) from a rear end (4) to a front end (3), said vehicle (1) extending transversely from a first side (5) to a second side (6) which are located on either side of said anteroposterior plane (100), said obstacle detection system (10) comprising at least one obstacle detector (14) having a scanning pattern effecting detection in a field of view, **characterised in that** said obstacle detection system (10) comprises at least one obstacle detector referred to as "first obstacle detector (15)" effecting detection in a first field of view (500) and an obstacle detector referred to as "second obstacle detector (16)" effecting detection in a second field of view (600), the first obstacle detector (15) being intended to be arranged on said first side (5) and the second obstacle detector (16) being intended to be arranged on said second side (6), the first field of view (500) and the second field of view (600) intersecting in a common field of view (700) during at least one operating mode in order to permit checking of the operation of the obstacle detection system (10) when an obstacle is detected in the common field of view (700), the first obstacle detector (15) and the second obstacle detector (16) comprise a first transmitter (21) emitting a first detection signal (101) and a second transmitter (22) emitting a second detection signal (201), respectively, the first obstacle detector (15) and the second obstacle detector (16) comprising, respectively, a first receiver (26) which receives a first reception signal (102) and a second receiver (27) which receives a second reception signal (202) when the first detection signal (101) and the second detection signal (201) strike an obstacle (300), said obstacle detection system (10) comprising an analysis unit (30) which performs a comparison of said first reception signal (102) and said second reception signal (202) when the first obstacle detector (15) and the second obstacle detector (16) are directed at one and the same obstacle which is present in said common field of view (700), said analysis unit (30) communicating with a signalling unit (40) for signalling a malfunction if a result of said comparison is not in accordance with a predetermined comparison criterion.

2. An obstacle detection system according to Claim 1, **characterised in that** the first obstacle detector (15) and the second obstacle detector (16) are to be selected from a list comprising at least one of the following obstacle detectors: a RADAR detector, a LIDAR detector.

3. An obstacle detection system according to any one of Claims 1 to 2, **characterised in that** the common field of view (700) is intended to be arranged in front of said front end (3).

4. An obstacle detection system according to any one of Claims 1 to 3, **characterised in that** the first obstacle detector and the second obstacle detector being identical, the first obstacle detector (15) and the second obstacle detector (16) each comprise a measuring device (28) measuring the peak power of a reception signal which is received, in order to perform said comparison said analysis unit (30) comparing a first quotient of a first rated peak power (P1) and of a first peak power (S1) of a first reception signal (102) of the first obstacle detector (15) and a second quotient of a second rated peak power (P2) and of a second peak power (S2) of a second reception signal (202) of the second obstacle detector (16).

5. An obstacle detection system according to any one of Claims 1 to 4, **characterised in that** said obstacle detection system (10) comprises a processing unit (50) connected to the first obstacle detector (15) and to the second obstacle detector (16) for determining a visibility value when an obstacle is detected.

6. An obstacle detection system according to any one of Claims 1 to 5, **characterised in that** said obstacle detection system (10) comprises at least one actuating element referred to as "sight actuating element (65)" which modifies an angle of sight of at least said first obstacle detector (15) and second obstacle detector (16).

7. An obstacle detection system according to Claim 6, **characterised in that** said obstacle detection system (10) comprises a feedback control system (60) of said sight actuating element (65) for performing at least one of the following functions:

   - compensating for a variation in pitch attitude of the vehicle (1) in order to detect an obstacle in a predetermined plane,
   - scanning a total field of view (801) greater than the field of view (800) scanned by one of said first and second obstacle detectors which cooperate with the sight actuating element (65).

8. An obstacle detection system according to any one of Claims 1 to 7,
**characterised in that** said obstacle detection system (10) comprises at least one actuating element referred to as "bearing actuating element (70)" for displacing in rotation, about an axis in elevation (AX) intended to be parallel to the anteroposterior plane (100), at least one of said first obstacle detector (15) and second obstacle detector (16).

9. An obstacle detection system according to any one of Claims 6 to 8,
**characterised in that** said first obstacle detector (15) and the second obstacle detector (16) move in opposite directions.

10. An obstacle detection system according to any one of Claims 1 to 9,
**characterised in that** the first obstacle detector (15) and the second obstacle detector (16) are arranged back-to-back, the first field of view (500) and the second field of view (600) each being greater than 180 degrees so as to intersect at said common field of view (700).

11. An obstacle detection system according to any one of Claims 1 to 10,
**characterised in that** said obstacle detection system (10) comprises a measurement means (61) for measuring a forward speed of said vehicle (1), said first field of view (500) and said second field of view (600) being a function of said forward speed.

12. A vehicle (1) extending longitudinally along an anteroposterior plane of symmetry (100) from a rear end (4) to a front end (3), said vehicle (1) extending transversely from a first side (5) to a second side (6) located on either side of said anteroposterior plane (100),
**characterised in that** said vehicle (1) comprises an obstacle detection system (10) according to any one of Claims 1 to 11, the first obstacle detector (15) being arranged on said first side (5) and the second obstacle detector (16) being arranged on said second side (6).

13. A vehicle according to Claim 12,
**characterised in that**, said vehicle (1) comprising a first aerodynamic surface (7) arranged on the first side (5) and a second aerodynamic surface (8) arranged on the second side (6), the first obstacle detector (15) is borne by the first aerodynamic surface (7) and the second obstacle detector (16) is borne by the second aerodynamic surface (8).

14. Implementation of an obstacle detection method on board a vehicle according to any one of Claims 12 to 13,
**characterised in that** this method comprises the following steps:

 - detection (STP1) of an obstacle in the common field of view (700) by the first obstacle detector (15) and the second obstacle detector (16),
 - checking (STP2) proper operation of the obstacle detection system (10) following said detection of an obstacle in the common field of view (700) by performing a comparison of said first reception signal (102) and said second reception signal (202) when the first obstacle detector (15) and the second obstacle detector (16) are directed at one and the same obstacle which is present in said common field of view (700).

15. Implementation of a method according to Claim 14,
**characterised in that**, the first obstacle detector (15) and the second obstacle detector (16) emitting a first detection signal (101) and a second detection signal (201), the first obstacle detector (15) and the second obstacle detector (16) receiving a first reception signal (102) and a second reception signal (202) respectively when the first detection signal (101) and the second detection signal (201) strike an obstacle (300), said checking (STP2) is carried out by performing the following steps:

 - determination of a first quotient of a first rated peak power (P1) and a peak power (S1) of a first reception signal (102),
 - determination of a second quotient of a second rated peak power (P2) and of a second peak power (S2) of a second reception signal (202) of the second obstacle detector (16),
 - comparison of the first quotient and the second quotient in order to check that a comparison criterion is met.

Fig.1

Fig.2

**Fig.3**

β1

800

α1

**Fig.4**

β1

801

α2

**Fig.5**

β2

801

α2

**Fig.6**

STP1

STP2

STP3

**RÉFÉRENCES CITÉES DANS LA DESCRIPTION**

**Documents brevets cités dans la description**

- US 2013057427 A
- DE 102005003969
- US 2014062753 A
- FR 2913775
- US 2010299067 A
- DE 102007014878